# EUROPEAN PATENT APPLICATION

(11) **EP 3 900 926 A1**
(43) Date of publication of application: **27.10.2021**
(21) Application number: 20171254.4
(22) Date of filing: 24.04.2020
(51) Int. Cl.: B32B 3/26, B32B 17/10

(54) **PROCESS FOR THE MANUFACTURE OF A LAMINATED GLASS USING AN IMMOBILIZED INTERLAYER STACK**

(71) Applicant: Kuraray Co., Ltd., Kurashiki-shi, Okayama 710-0801 (JP)
(72) Inventor: Fuss, Robert, 65835 Liederbach (DE); Schmidt, Thomas, 07745 Jena (DE)
(74) Representative: Müller-Boré & Partner Patentanwälte PartG mbB

(57) **Abstract**

The present invention relates to a process for the manufacture of a laminated glass using an immobilized interlayer stack wherein at least two films are being immobilized by means of a laser perforation.

## Description

The present invention relates to a process for the manufacture of a laminated glass using an immobilized interlayer stack wherein at least two films are being immobilized by means of laser perforation.

Laminated glazing generally consists of at least two sheets of glass connected by means of a polymer interlayer. Recently, many laminates - especially those used in motor vehicles - contain several different polymer films in the interlayer serving different purposes.

For example, US 20180319131 A1, which is incorporated by reference herein, discloses an interlayer assembly for use in a motor vehicle, said interlayer assembly comprising various separate films and functionalities.

Another example is disclosed in WO 2019121535 A1, which is incorporated by reference herein, using a thin film made from polyvinyl butyral (PVB) together with a conventional PVB interlayer to provide an obscuration area for camera systems in a windshield.

Yet another example is disclosed in EP 3246157 A1, which is incorporated by reference herein, and which uses a film containing a polymer different from PVB, for example polyethylene terephthalate (PET), as a carrier for certain functionalities like heat shielding in between two PVB films.

All these examples as well as various other interlayer applications have a common problem in the manufacturing process. During the lamination process, especially in lamination using vacuum bags, which are often used in the glazing industry for windshields and other car windows, the separate films forming an interlayer stack need to be absolutely accurately placed on top of each other. For example, the openings in the obscuration area in the second example above need to be exactly in front of the camera lenses in order for the camera system to work properly.

Accordingly, it was an object of the invention to provide an improved process to ensure that the position of the separate films of an interlayer do not shift during the lamination process and/or during transportation and storage.

Surprisingly, this problem was solved by perforating the different films using a laser beam, i.e. by "stitching" various polymer films together to form an immobilized interlayer stack.

Thus, a first aspect of the present invention is a process for the manufacture of a laminated glass comprising two sheets of glass, combined by an interlayer stack comprising at least one film B containing a polyvinyl acetal PB and at least one plasticiser WB in an amount of at least 22 % by weight, at least one film A, and optionally other films and components, said process comprising the steps of
a) stacking film A, film B and the optional other films and components atop of each other and arrange them in their final position in the laminated glass,
b) immobilize the relative positions of film A, film B and optionally the other films and components by perforating at least films A and B using a laser, and
c) placing the thus stitched interlayer stack between the two sheets of glass, and
d) laminating the two sheets of glass together with the interlayer stack to form the laminated glass.

Hereinafter, all content of plasticizers and other components of the different films shall refer to the state of the films prior to having any contact to each other.

Preferably, film A contains a polyvinyl acetal PA and equal to or less than 10 % by weight of at least one plasticiser WA.

More preferably, film A has an obscuration area provided by a printed or coated layer on at least one surface of film A.

The term "obscuration area" refers to a region of the laminate having a light transmission in the visible spectrum of less than 5%.

The coated or printed layer generally contains a pigment. Useful As pigments include carbon black, iron oxides, polyaniline, perylenes or spinel pigments. The pigments may be dispersed in a carrier fluid like water, alcohol or mixtures of alcohol and water. Furthermore, binders like polyvinylalcohol, polyvinylbutyral, polyvinylpyrrolidone, polyacrylates, polyurethanes or poly styrene-acrylate may be present.

Water-based printing inks are preferred over printing inks based on organic solvents since they do not swell or dissolve the film and/or lead to film defects. Printing inks based on organic solvents can be used if the coating is thin and/or the drying step is fast such that the solvent does not migrate into the film.

The printing inks can be applied via techniques that are commonly known in the printing industry such as offset printing, rotogravure printing, flexography, and screen-printing, followed usually by a drying step.

Film B may be any plasticized PVB film known in the art.

Plasticiser-containing films B used in accordance with the invention contain, in the starting state prior to lamination, at least 22 % by weight, such as 22.0 - 45.0 % by weight, preferably 25.0 - 32.0 % by weight and in particular 26.0 - 30.0 % by weight plasticiser.

Film B preferably contains polyvinyl acetals having a proportion of polyvinyl acetate groups, either identically or differently, of 0.1 to 20 mol %, preferably 0.5 to 3 mol %, or 5 to 8 mol %.

The thickness of film B in the starting state is 450 - 2500 *µ*m, preferably 600 - 1000 *µ*m, preferably 700 - 900 *µ*m.

The films can contain polyvinyl acetals, each having a different polyvinyl alcohol content, degree of acetalisation, residual acetate content, ethylene proportion, molecular weight and/or different chain lengths of the aldehyde of the acetal groups.

The films A, in the preferred embodiment that film A contains a polyvinyl acetal, or film B preferably contain polyvinyl acetals having a proportion of polyvinyl acetate groups, either identically or differently, of 0.1 to 20 mol %, preferably 0.5 to 3 mol %, or 5 to 8 mol %.

The polyvinyl alcohol content of the polyvinyl acetal PA used in film A may be between 6 - 26 % by weight, 8 - 24 % by weight, 10 - 22 % by weight, 12 - 21 % by weight, 14 - 20 % by weight, 16 - 19 % by weight and preferably between 16 and 21 % by weight or 10 - 16 % by weight.

As plasticiser, one or more compounds selected from the following groups:
- esters of polyvalent aliphatic or aromatic acids, for example dialkyl adipates, such as dihexyl adipate, dioctyl adipate, hexyl cyclohexyl adipate, mixtures of heptyl adipates and nonyl adipates, diisononyl adipate, heptyl nonyl adipate, and esters of adipic acid with cycloaliphatic ester alcohols or ester alcohols containing ether compounds, dialkyl sebacates, such as dibutyl sebacate, and also esters of sebacic acid with cycloaliphatic ester alcohols or ester alcohols containing ether compounds, esters of phthalic acid, such as butyl benzyl phthalate or bis-2-butoxyethyl phthalate.
- esters or ethers of polyvalent aliphatic or aromatic alcohols or oligo ether glycols with one or more unbranched or branched aliphatic or aromatic substituents, for example esters of glycerol, diglycols, triglycols or tetraglycols with linear or branched aliphatic or cycloaliphatic carboxylic acids; Examples of the latter group include diethylene glycol-bis-(2-ethyl hexanoate), triethylene glycol-bis-(2-ethyl hexanoate), triethylene glycol-bis-(2-ethyl butanoate), tetraethylene glycol-bis-n-heptanoate, triethylene glycol-bis-n-heptanoate, triethylene glycol-bis-n-hexanoate, tetraethylene glycol dimethyl ether and/or dipropylene glycol benzoate
- phosphates with aliphatic or aromatic ester alcohols, such as tris(2-ethylhexyl)phosphate (TOF), triethyl phosphate, diphenyl-2-ethylhexyl phosphate, and/or tricresyl phosphate
- esters of citric acid, succinic acid and/or fumaric acid.

By definition, plasticisers are organic liquids having a high boiling point. For this reason, further types of organic liquids having a boiling point above 120 °C can also be used as plasticiser.

To laminate the interlayer stack together with the glass sheets, the methods with which a person skilled in the art is familiar can be used, especially autoclave processes.

So called "autoclave processes" are carried out at an increased pressure from approximately 10 to 15 bar and temperatures from 100 to 150 °C during approximately 2 hours. Vacuum bag or vacuum ring methods, for example according to EP 1 235 683 B1, function at approximately 200 mbar and 130 to 145 °C.

Vacuum laminators may also be used. These consist of a chamber that can be heated and evacuated, in which laminated glazing can be laminated within 30 - 60 minutes. Reduced pressures from 0.01 to 300 mbar and temperatures from 100 to 200 °C, in particular 130 - 160 °C, have proven their worth in practice.

In the simplest case, in order to produce the laminated glass laminates, the interlayer stack is positioned on a glass sheet. The second glass sheet is then applied and a glass film laminate is produced. Excessive air can then be removed with the aid of any pre-lamination method known to a person skilled in the art. Here, the layers are also already firstly lightly adhesively bonded to one another and to the glass.

In a different embodiment of the present invention, film A contains polyethylene terephthalate (PET). Preferably, film A is sandwiched between a first film B and a second film B.

Also preferably, at least one of the films B is coloured. More preferably, more than one film B is used and the films B can have different colours. For example, the films B can be tinted in black or various shades of grey to dim the natural light inside a vehicle, e.g. in the roof or side windows. As another example, one of more films B can be coloured in various shades of grey to provide for the dimming effect while other films B are coloured in a different colour such as red to provide for a natural light colour and to overcompensate possible colour shifts from the other film layers in the interlayer stack.

In a preferred embodiment, a first and a second film B may be bonded to the film(s) A along a periphery of the film(s) A to form an edge seal.

Film(s) A may comprise a pair of PET films located between the first and second film, wherein one of the PET films is secured to the first film and the other of the PET films is secured to the second film; a pair of electrically conductive electrodes located between the PET films, wherein one of the electrodes is secured to one of the PET films and the other of the electrodes is secured to the other of the PET films, and wherein each of the electrodes comprises an overhanging portion that extends past an edge of the other of the electrodes; a pair of bus bars, wherein one of the bus bars is electrically coupled to the overhanging portion of one of the electrodes and the other of the bus bars is electrically coupled to the overhanging portion of the other of the electrodes; a switching material located between the electrodes; and an epoxy between and bonding the PET films to each other.

The interlayer stack may further comprise a frame that extends around at least a portion of the film(s) A. It may circumscribe the entirety of the film(s) A.

The frame may comprise de-airing channels extending from an interior edge to an exterior edge of the frame.

The interlayer stack may further comprise a pair of bus bars located between the first and second films B, wherein one of the bus bars is attached to the first film B and the other of the bus bars is attached to the second film B; a pair of PET films A located between the first and second films B, wherein one of the PET films A is secured to the first film B and the other of the PET films A is secured to the second film B, and wherein each of the PET films A comprises an overhanging portion that extends past an edge of the other of the PET films A; a pair of electrical coatings located between the PET films A, wherein one of the electrical coatings is on one of the PET films A and the other of the electrical coatings is on the other of the PET films A; and a switching material located between the electrical coatings.

Accordingly, the interlayer stack preferably comprises, in that order,
a. a first film B,
b. a first film A,
c. a second film A, and
d. a second film B.

More preferably, the interlayer stack further comprises
e. a pair of electrically conductive electrodes located between the first film A and the second film A, wherein one of the electrodes is secured to the first film A and the other of the electrodes is secured to the second film A, and wherein each of the electrodes comprises an overhanging portion that extends past an edge of the other of the electrodes;
f. a pair of bus bars, wherein one of the bus bars is electrically coupled to the overhanging portion of one of the electrodes and the other of the bus bars is electrically coupled to the overhanging portion of the other of the electrodes;
g. a switching material located between the electrodes; and h. an epoxy between and bonding the first film A and the second film A to each other.

The switching material may be chosen from a compound having one or more chromophores that are reversibly convertible between colored (dark) and uncolored (light) states; the switching material may further comprise a solvent portion, polymer(s) (such as PET), salts, or other components to support the conversion of the chromophore between colored and uncolored states when exposed to light or voltage. Some examples of chromophores include fulgides, diarylethenes or dithienylcyclopentenes.

Generally a laser beam is used for the perforation to immobilize the separate films in the interlayer stack. However, a sonication process can also be used according to the invention. Any conventional laser with sufficient energy to penetrate the films can be used.

Preferably, the perforation is performed using a CO2-laser using a laser power of from 100 to 200 W.

The separate stitches can be distanced from each other in an equidistant way. However, also different distances can be used. Alternatively, only two of the four sides of a square interlayer stack can be stitched.

Preferably, the perforations formed in step b) are distanced from each other from 1 mm to 20 mm, preferably the distance is 5 mm. Also preferably, the distance of the stitches from the fram, if used, is about 5 mm.

Also preferably, the pulse length of the laser used in step b) is from 10 ms to 100 ms, preferably the pulse length is 50 ms.

Another aspect of the present invention concerns a laminated glass obtained in a process according to the present invention.

Yet another aspect of the present invention concerns an interlayer stack obtained in a process according to the present invention. Preferably, said interlayer stack comprises
a. a first film B,
b. a first film A,
c. a second film A,
e. a second film B,
f. a pair of electrically conductive electrodes located between the first film A and the second film A, wherein one of the electrodes is secured to the first film A and the other of the electrodes is secured to the second film A, and wherein each of the electrodes comprises an overhanging portion that extends past an edge of the other of the electrodes;
g. a pair of bus bars, wherein one of the bus bars is electrically coupled to the overhanging portion of one of the electrodes and the other of the bus bars is electrically coupled to the overhanging portion of the other of the electrodes;
h. a switching material located between the electrodes; and
d. an epoxy between and bonding the first film A and the second film A to each other;
wherein at least the film B and the second film B are perforated and thus, immobilized by using a laser.

The following examples illustrate the invention.

### Examples

### Materials:

- Film A: Switchable PET film as disclosed in US 20180319131 A1, d=0.5 mm
- Frame material to compensate the thickness of film A: transparent PVB film, d=0.5 mm
- film B1: PVB film red colour, d=0.2 mm
- film B2: PVB film grey colour 30% obscuration, d=0.2 mm
- film B3: PVB film grey colour 100% obscuration, d=0.2 mm

### Equipment :

- CO2-laser, Pmax=200 W (Synrad firestar f201)
- Axis system, 1 m x 1 m move area, Fmax=30 m/min, with perforation tool (AEROTECH GmbH)
- Laser head, focal length 5", removable nozzle (Ø 2 mm), connection to work-/ cover gas (compressed air or nitrogen)
- Fixture, flat plate

### Fabrication steps:

Preparing: Rough pre-cut (knife, shear) of all PVB film
Apply of the transparent PVB film and cut of stripes to compensate the thickness of film A;
- Laser power 100 W
- Cut speed 12 m/min
- Focus on the surface of the foil
- With nozzle, 0.25 bar gas pressure

Cut the film A (PET)
- Laser power 100 W
- Cut speed 3 m/min
- Focus on the surface of the foil
- With nozzle, 0.25 bar gas pressure

Position of the PVB-foil grey 30%, outer fixture slits must be covered
Apply of film A and position it on inner fixture slits
Apply of the transparent PVB frame material and position it on film A; outer fixture slits must be covered
Apply of the red PVB film; outer fixture slits must be covered; Screw out the gas nozzle and increase the gas pressure to 1.5 bar
Perforation of the 3 PVB films B in a distance of 1 mm around Film A
- Laser power 200W
- Speed 3m/min
- Pulse length 50ms
- Pulse distance 5mm
- Focus 10mm above the surface of the foil
- Without nozzle, 1.5bar gas pressure

With the perforation step, an immobilized interlayer stack consisting of several films B and a film A has been produced which can be conveniently transported, stored and applied in the lamination process.

## Claims

1. A process for the manufacture of a laminated glass comprising two sheets of glass, combined by an interlayer stack comprising at least one film B containing a polyvinyl acetal PB and at least one plasticiser WB in an amount of at least 22 % by weight, at least one film A, and optionally other films and components,
said process comprising the steps of
a) stacking film A, film B and the optional other films and components atop of each other and arrange them in their final position in the laminated glass,
b) immobilize the relative positions of film A, film B and optionally the other films and components by perforating at least films A and B using a laser, and
c) placing the thus stitched interlayer stack between the two sheets of glass, and
d) laminating the two sheets of glass together with the interlayer stack to form the laminated glass.

2. The process according to claim 1 wherein film A contains a polyvinyl acetal PA and equal to or less than 10 % by weight of at least one plasticiser WA.

3. The process according to claim 2 wherein film A has an obscuration area provided by a printed or coated layer on at least one surface of film A.

4. The process according to claim 1 wherein film A contains polyethylene terephthalate (PET).

5. The process according to claim 4 wherein film A is sandwiched between a first film B and a second film B.

6. The process according to claim 4 wherein at least one of the films B is coloured.

7. The process according to claim 4, 5 or 6 wherein the interlayer stack comprises, in that order,
a. a first film B,
b. a first film A,
c. a second film A, and
d. a second film B.

8. The process according to claim 6 wherein the interlayer stack further comprises
e. a pair of electrically conductive electrodes located between the first film A and the second film A, wherein one of the electrodes is secured to the first film A and the other of the electrodes is secured to the second film A, and wherein each of the electrodes comprises an overhanging portion that extends past an edge of the other of the electrodes;
f. a pair of bus bars, wherein one of the bus bars is electrically coupled to the overhanging portion of one of the electrodes and the other of the bus bars is electrically coupled to the overhanging portion of the other of the electrodes;
g. a switching material located between the electrodes; and
h. an epoxy between and bonding the first film A and the second film A to each other.

9. The process according to any one of the claims above wherein step b) is performed using a CO2-laser using a laser power of from 100 to 200 W.

10. The process according to any one of the claims above wherein the perforations formed in step b) are distanced from each other from 1 mm to 20 mm, preferably the distance is 5 mm.

11. The process according to any one of the claims above wherein the pulse length of the laser used in step b) is from 10 ms to 100 ms, preferably the pulse length is 50 ms.

12. A laminated glass obtained in a process according to any one of the claims 1 to 11.

13. An interlayer stack obtained in a process according to any one of the claims 1 to 11.

14. An interlayer stack comprising
a. a first film B,
b. a first film A,
c. a second film A,
i. a second film B,
j. a pair of electrically conductive electrodes located between the first film A and the second film A, wherein one of the electrodes is secured to the first film A and the other of the electrodes is secured to the second film A, and wherein each of the electrodes comprises an overhanging portion that extends past an edge of the other of the electrodes;
k. a pair of bus bars, wherein one of the bus bars is electrically coupled to the overhanging portion of one of the electrodes and the other of the bus bars is electrically coupled to the overhanging portion of the other of the electrodes;
1. a switching material located between the electrodes; and
d. an epoxy between and bonding the first film A and the second film A to each other;
wherein at least the film B and the second film B are perforated and thus, immobilized by using a laser.
